# EUROPEAN PATENT APPLICATION

(11) **EP 3 257 824 A1**
(43) Date of publication of application: **20.12.2017**
(21) Application number: 16305729.2
(22) Date of filing: 15.06.2016
(51) Int. Cl.: C03B 23/025, C03B 23/027

(54) **APPARATUS AND METHOD FOR BENDING THIN GLASS SHEETS**

(71) Applicant: Corning Incorporated, Corning, New York 14831 (US)
(72) Inventor: DANNOUX, Thierry Luc Alain, 77210 AVON (FR); FREDHOLM, Michele Marie-Louise, 77870 VULAINES-SUR-SEINE (FR); GOLYATIN, Vladislav Yuryevich, 77210 AVON (FR); JOUBAUD, Laurent, 75012 PARIS (FR); TANGUY, Ronan, 77880 GREZ-SUR-LOING (FR)
(74) Representative: Le Roux, Martine

(57) **Abstract**

A local bend is formed in a glass sheet (10) by supporting large flat areas (14, 16) of the glass sheet (10) on large flat supports (106L, 106R) that are articulated relative to each other while leaving an area (12) of the glass sheet in which the local bend is to be formed unsupported. A combination of bending forces applied to the glass sheet (10) by articulation of the large flat supports (106L, 106R) and local heating (110) of the unsupported area (12) of the glass sheet (10) produces the local bend.

## Description

### BACKGROUND

The emergence of high-strength, thin glass sheets has prompted the desire in various markets for three-dimensional (3D) glass articles formed from these sheets, with emphasis on 3D glass articles having combinations of flat portions and highly curved, localized shapes. One 3D glass article of interest has a central local bend between two large flat areas. A glass article having this shape may be, for example, used as a console in architectural or automotive interior applications, where one of the large flat areas may receive a laminated display and the other of the large flat areas may correspond to other functionalities, e.g., cup holder, CD slots, and the like. These newer applications generally require that the 3D glass article has a good cosmetic surface quality meeting cover display requirements in the flat areas, i.e., almost perfect flatness and no optical distortion in the flat areas, and a small to medium range local bending, e.g., bending radius of less than 100 mm, between the flat areas. These requirements together with the combined flat and bent areas present challenges when forming the shaped glass article by reforming a thin glass sheet. Reforming conditions that enable 3D shaping in the bend area are generally not suitable for maintaining flatness in the flat areas, and reforming conditions that favor maintaining flatness in the flat areas are generally not suitable for 3D shaping in the bend area. These conflicting reforming conditions generally limit the effectiveness of isothermal processes in forming the 3D glass article.

Non-isothermal processes for forming bent glass sheets are known in the art. One example is disclosed in U.S. Patent Publication No. 2013/0329346 (Dannoux et al., "Method and Apparatus for Bending a Glass Sheet and an Electronic Device Casing", 12 December 2013). In the Dannoux et al. publication, a flat region of a glass sheet rests on a flat surface of a support while a bend region of the glass sheet overhangs the support. The entire glass sheet is heated to an initial temperature. Then, a local heater is used to heat the bend region to a temperature greater than the initial temperature. The local heater is translated along the bend region while a bending force is applied to the bend region, resulting in a bend that is incrementally formed in the bend region according to the location of the heat band applied by the moving local heater. Because the overhanging bend region is unsupported, the bend region cannot be too large to avoid uncontrolled sagging of the bend region while forming the bend. The method is typically limited to forming bends with a very small radius of curvature, e.g., 2 to 20 mm, and short bends, e.g., 20 to 100 mm.

Another example of a non-isothermal process is disclosed in U.S. Patent No. 4081263 (Mestre et al., "Method and Apparatus for Bending a Sheet of Vitreous Material," 28 March 1978). In the Mestre et al. patent, a vitreous sheet is arranged on a reaction bar so that the line of contact of the sheet with the reaction bar corresponds with the place where it is desired to bend the sheet. Stirrups are lowered such that they exert downwardly directed forces on end margins of the sheet. A first set of heating elements arranged above the sheet uniformly heats the sheet. A second set of heating elements arranged above the line of contact between the sheet and the reaction bar locally heats the sheet in the bending area. When the bending area of the sheet reaches its softening temperature, the bending forces cause the sheet to bend about the line contact between the sheet and the reaction bar. The leaves of the sheet situated on either side of the bending area are allowed to sag under their weight and the bending forces applied by the stirrups. The pivoting movement of the stirrups moves sheet support bars into contact with the vitreous sheet, raising the vitreous sheet from the reaction bar. However, while the vitreous sheet is at the softening temperature and in contact with the reaction bar, there is risk of the reaction bar leaving an imprint on the vitreous sheet in the bending area.

### SUMMARY

A first aspect of this disclosure includes an apparatus for forming a local bend in a glass sheet. In one illustrative embodiment, the apparatus includes an articulated frame having a first frame segment and a second frame segment arranged adjacent to the first frame segment, wherein at least one of the first frame segment and the second frame segment is pivotable such that an angle between the first frame segment and the second frame segment is adjustable by relative pivotal motion between the first frame segment and the second frame segment. The articulated frame further includes a first glass sheet support plate mounted on the first frame segment for supporting a first wing area of the glass sheet and a second glass sheet support plate mounted on the second frame segment for supporting a second wing area of the glass sheet. A gap is formed between opposing ends of the first and second glass sheet support plates. The bend area of the glass sheet is exposed to the gap when the first and second wing areas of the glass sheet are supported on the first and second glass sheet support plates, respectively. The gap defines a no-contact forming area in which the local bend can be formed in the bend area of the glass sheet without touching the bend area. The apparatus further includes at least one articulating mechanism for pivoting at least one of the first and second frame segments relative to the other frame segment to form a select angle between the first and second frame segments. The apparatus further includes a local heating device arranged near the gap for localized heating of the bend area of the glass sheet exposed to the gap.

A second aspect of this disclosure may include an apparatus as described in the first aspect and may further include two stands in a spaced apart relation. The articulated frame may be arranged between the two stands and coupled to the two stands, and the first frame segment may be rotatable relative to the two stands.

A third aspect of this disclosure may include an apparatus as described in the second aspect, wherein the second frame segment is attached to the two stands and is not rotatable relative to the two stands.

A fourth aspect of this disclosure may include an apparatus as described in the second or third aspect and may further include a tunable stopper arranged on at least one of the two stands to limit pivoting of the first frame segment once the select angle is formed between the first and second frame segments.

A fifth aspect of this disclosure may include an apparatus as described in any of the second to the fourth aspects and may further include two bearing assemblies mounted to the two stands and a shaft rotatably supported in each of the bearing assemblies. The first frame segment may be coupled to each of the shafts such that rotation of the shafts causes pivoting of the first frame segment.

A sixth aspect of this disclosure may include an apparatus as described in the fifth aspect, wherein one of the shafts supported in one of the bearing assemblies is coupled to the at least one articulating mechanism, and both shafts supported in both bearing assemblies are coupled to a transvers linking bar extending across the articulated frame such that both shafts are rotatable using the at least one articulating mechanism.

A seventh aspect of this disclosure may include an apparatus as described in the fifth or sixth aspect, wherein each of the bearing assemblies includes an offset bearing.

An eighth aspect of this disclosure includes an apparatus as described in any of the first to the seventh aspects and further includes counterweights for balancing the weight of the first frame segment and maintaining the apparatus in a stable position as the first frame segment is pivoted relative to the second frame segment and held at the select angle relative to the second frame segment.

A ninth aspect of this disclosure includes an apparatus as described in any of the first to the eight aspects, wherein each of the first and second glass sheet support plates is made of a glass or glass-ceramic material.

A tenth aspect of this disclosure includes an apparatus as described in any of the first to the ninth aspects, wherein each of the first and second glass sheet support plates is made of a transparent material having a coefficient of thermal expansion of 32 x 10⁻⁷ C⁻¹ or less and a transmission in the infrared range of at least 70%.

An eleventh aspect of this disclosure includes an apparatus as described in any of the first to the tenth aspects and further includes a heating device other than the local heating device for heating the entire glass sheet to a preheating temperature.

A twelfth aspect of this disclosure includes an apparatus as described in any of the first to the eleventh aspects, wherein the local heating device includes a wired heater.

A thirteenth aspect of this disclosure includes an apparatus as described in any of the first to the twelfth aspects and further includes a reflector arranged near the gap and local heating device in a position to reflect heat from the local heating device towards the gap.

A fourteenth aspect of this disclosure includes an apparatus as described in the thirteenth aspect, wherein a height of the local heating device and a height of the reflector relative to the gap area adjustable.

A fifteenth aspect of this disclosure includes an apparatus as described in the thirteenth or fourteenth aspect, wherein the reflector is rotatable relative to the gap to adjust a direction of the heat reflected from the local heating device towards the gap.

A sixteenth aspect of this disclosure includes an apparatus as described in any of the first to the fifteenth aspects, wherein the articulated frame has a flat position in which the first and second frame segments lie in the same plane, and wherein the articulated frame is inclined to the horizontal when in the flat position.

A seventeenth aspect of this disclosure includes a method of bending a glass sheet. In one illustrative embodiment, the method includes supporting a first wing area of the glass sheet by placing a surface of the first wing area of the glass sheet in contact with a surface of a first glass sheet support plate attached to a first frame segment of an articulated frame. The method further includes supporting a second wing area of the glass sheet by placing a surface of a second wing area of the glass sheet in contact with a surface of a second glass sheet support plate attached to a second frame segment of the articulated frame. The method includes forming an unsupported bend area of the glass sheet by positioning a bend area of the glass sheet between the first and second wing areas at a gap between opposing ends of the first and second glass sheet support plates without physically supporting the bend area. The method includes heating the entire glass sheet to a select preheating temperature. The method includes locally heating the unsupported bend area of the glass sheet to a bending temperature that is higher than the select preheating temperature while maintaining the supported wing areas of the glass sheet at a temperature lower than the bending temperature. The method includes moving the articulated frame to a bent position by relative pivotal motion between the first and second frame segments while the unsupported bend area is at the bending temperature. The articulated frame applies bending forces to the glass sheet during moving the articulated frame to the bent position. The bending forces and the localized heat applied to the unsupported bend area form a bend having a select profile in the bend area.

An eighteenth aspect of this disclosure includes a method as described in the seventeenth aspect, wherein moving the articulated frame to the bent position includes moving the articulated frame from a flat position to the bent position.

A nineteenth aspect of this disclosure includes a method as described in the seventeenth or eighteenth aspect, wherein heating the entire glass sheet to a preheating temperature includes heating the entire glass sheet to a temperature in which the glass sheet has a viscosity in a range from 10¹³ to 10^{12.5} P.

A twentieth aspect of this disclosure includes a method as described any of the seventeenth to the nineteenth aspects, wherein locally heating the unsupported bend area includes locally heating the unsupported bend area to a temperature in which a portion of the glass sheet in the bend area has a viscosity in a range from 10^{11.4} to 10¹¹ P.

A twenty-first aspect of this disclosure includes a method as described in any of the seventeenth to the twentieth aspects, wherein the glass sheet includes a soda lime, an aluminosilicate, an alkali aluminosilicate, an alumino-borosilicate, or an alkali-boro-aluminosilicate glass.

### BRIEF DESCRIPTION OF DRAWINGS

The following is a description of the figures in the accompanying drawings. The figures are not necessarily to scale, and certain figures and certain views of the figures may be shown exaggerated in scale or in schematic in the interest of clarity and conciseness.
FIG.1 shows a glass sheet having a bend area between two wing areas.
FIG. 2 shows a 3D glass article formed from the glass sheet of FIG.1 by bending.
FIG. 3 shows an apparatus for bending a glass sheet, with an articulated frame of the apparatus in a flat position.
FIG. 4 shows an apparatus for bending a glass sheet, with the articulated frame of the apparatus in a bent position.
FIG. 5 shows the apparatus of FIG. 3 with a glass sheet mounted on the articulated frame.
FIG. 6 shows a cross-section of the apparatus of FIG. 3.
FIG. 7 shows a cross-section of the apparatus of FIG. 4.
FIG. 8 shows bending of a glass sheet using the apparatus of FIG. 3.
FIG. 9 shows an image of a bent glass sheet formed by the apparatus and method described in FIGS. 1-8.
FIG. 10 shows an image of a bent glass sheet formed by an isothermal sagging process.

### DETAILED DESCRIPTION

A glass sheet that may be shaped into a 3D glass article by bending according to embodiments disclosed herein may be made of any suitable glass composition for the intended use of the 3D glass article. In some examples, the glass sheet may be a chemical or thermally temperable glass, such as a soda lime glass, an alkali aluminosilicate glass, an alkali-boro-aluminosilicate glass, or a display-type glass, such as an aluminosilicate glass, a alumino-borosilicate glass, or the like. In some embodiments, the glass sheet is a thin glass sheet. For example, the thickness of the thin glass sheet may be in a range from 50 µm to 5 mm.

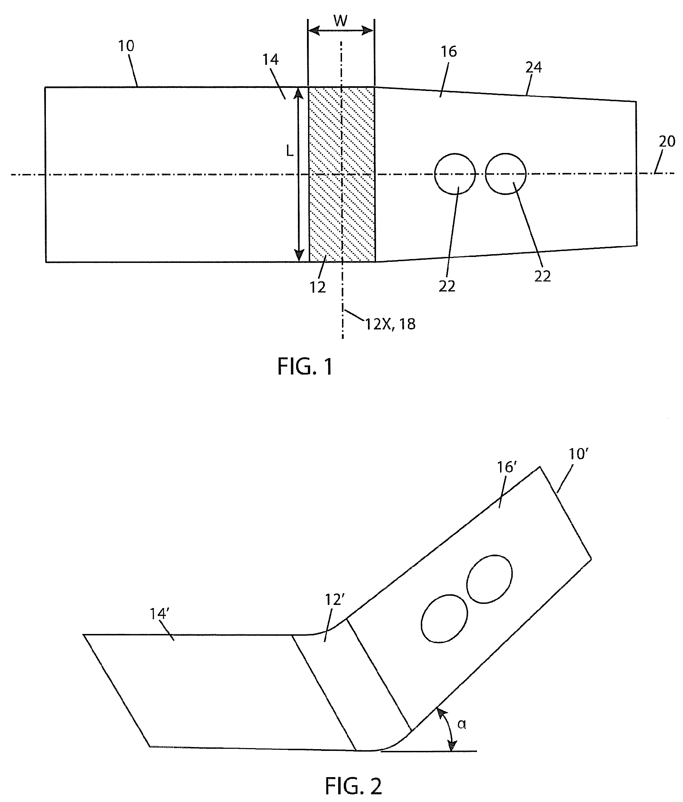

A bend to be formed in the glass sheet may be a simple curve, a complex curve, such as a spline, or a combination of curves of various radii. In some examples, the radius of each curve in the bend, or in the case of a splined radius, the local minimum radius of the bend, may be less than or equal to 100 mm or in a range from 200 µm to 100 mm. The bend angle may be in a range from greater than 0° to about 170°. (Bend angle is illustrated in FIG. 2 with the symbol α.)

FIG.1 shows an example of a glass sheet 10 to be shaped into a 3D glass article by bending. The glass sheet 10 has a bend area 12 between two wing areas 14,16. The bend area 12 is the region of the glass sheet 10 in which a local bend will be formed during a bending operation, and the wing areas 14,16 are regions of the glass sheet 10 that will not be deformed during the bending operation. Thus if the glass sheet 10 is provided as a flat sheet, the wing areas 14,16 will remain flat after the bending operation. The bend area 12 may not be symmetrically disposed within the glass sheet 10, i.e., the areas of the wing areas 14, 16 may or may not be the same. The glass sheet 10 may include features such as cutouts 22 and the like. In automobile applications, for example, cutouts for placement of automobile information center features, such as display, vehicle climate controls, radio controls, and the like, may be formed in the glass sheet. The glass sheet 10 may have a perimeter shape 24 that is rectangular or non-rectangular.

The bend area 12 may be oriented along the short axis 18 of the glass sheet 10, which means that the bend axis 12X of the bend area 12 is parallel to the short axis 18 of the glass sheet 10. In other examples, the bend area 12 may be oriented along the long axis 20 of the glass sheet, or the bend axis 12X may be parallel to the long axis 20, depending on the desired shape of the 3D article to be formed.

The bend area 12 is shown as having a width W and a length L. The width W is the dimension of the bend area 12 in a direction transverse to the bend axis 12X, and the length L is the dimension of the bend area 12 in a direction parallel to the bend axis 12X. When the bend area 12 is oriented along the short axis 18 of the glass sheet 10, W will be less than or equal to L. The opposite will be true if the bend area 12 is oriented along the long axis 20. Therefore, "length" will not always mean the longer dimension of the bend area, and "width" will not always mean the shorter dimension of the bend area.

FIG. 2 shows an example of a 3D glass article 10' formed by bending the glass sheet 10. The 3D glass article 10' has a local bend 12' (corresponding to the bend area 12 of the glass sheet 10 in FIG. 1) between wing areas 14', 16' (corresponding to the wing areas 14,16 of the glass sheet 10 in FIG. 1).

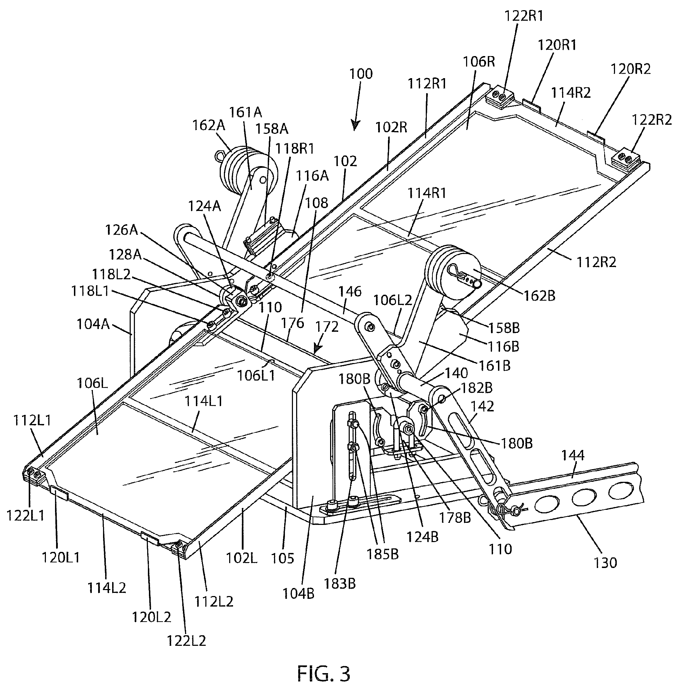

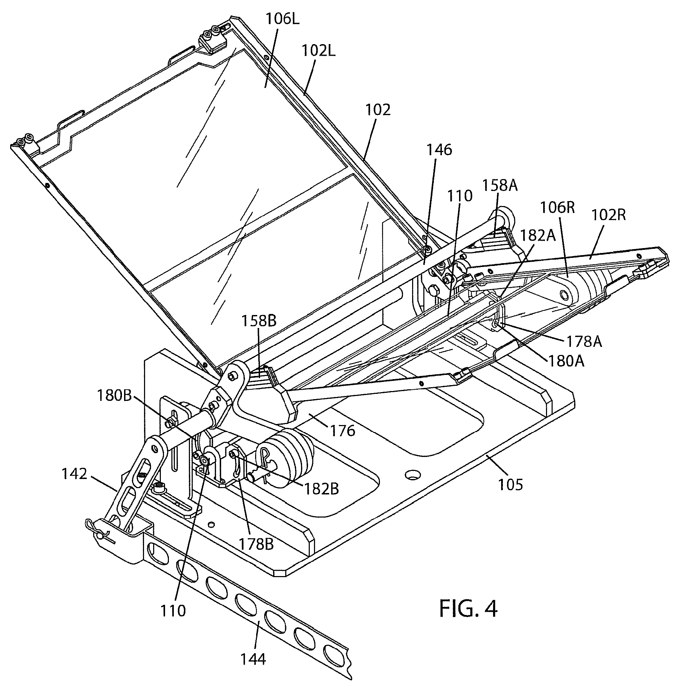

FIG. 3 shows an illustrative apparatus 100 for forming a local bend in a glass sheet, such as glass sheet 10 described above. In one illustrative embodiment, the apparatus 100 includes an articulated frame 102 arranged between and coupled to a pair of support stands 104A, 104B on a base 105. The articulated frame 102 is made of two frame segments 102L, 102R. In one illustrative embodiment, relative pivotal motion between the frame segments 102L, 102R moves the articulated frame 102 from a flat position (shown in FIG. 3) to a bent position (shown in FIG. 4). For the relative pivoting motion, either or both of the frame segments 102L, 102R may be pivotable.

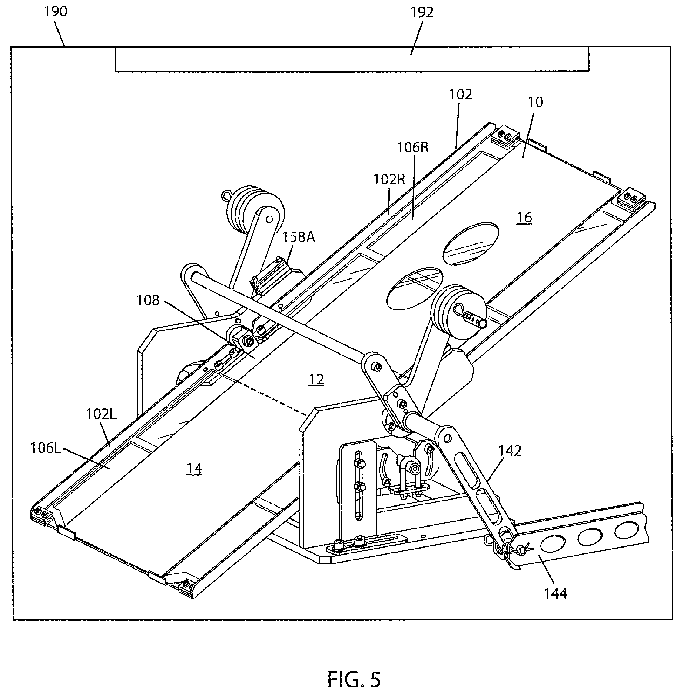

Glass sheet support plates 106L, 106R are attached to the frame segments 102L, 102R, respectively. Each of the glass sheet support plates 106L, 106R is sized to support one of the wing areas of the glass sheet (wing areas 14,16 are shown for glass sheet 10 in FIG. 1). In the flat position of the articulated frame 102, the glass sheet support plates 106L, 106R lie in the same plane and present a flat surface for receiving a glass sheet. FIG. 5 shows the glass sheet 10 mounted on the articulated frame 102 in the flat position of the articulated frame 102. In one embodiment, the articulated frame 102 may be at an angle, i.e., inclined, relative to the base 105 (or the horizontal) when in the flat position.

Returning to FIG. 3, the glass sheet support plates 106L, 106R are supported and spaced apart on the articulated frame 102 such that a gap 108 exists between opposing ends 106L1,106L2 of the glass sheet support plates 106L, 106R. The size of the gap 108 is selected based on the size of the bend area of the glass sheet such that when the wing areas of the glass sheet are placed on the glass sheet support plates 106L, 106R the bend area will be exposed to, or overlap, the gap 108. This allows forming of a local bend in the bend area without physically touching the bend area. Below the gap 108 is a heating device 110 that can be operated to locally heat the bend area of the glass sheet exposed to the gap 108. This allows any bending forces applied to the glass sheet through articulation of the articulated frame 102 to create 3D shaping only in the locally heated bend area of the glass sheet.

In one illustrative embodiment, each of the glass sheet support plates 106L, 106R is made of a thin transparent material having a low coefficient of thermal expansion (CTE), good transmission in the infrared (IR) range, and a high softening point. A low CTE may be defined as a CTE of 32 x 10⁻⁷ C⁻¹ or less. A good transmission in the IR may be defined as a transmission of at least 70% in the IR. These properties are selected to enable uniform heating of the glass sheet during the preheating phase and to enable low thermal mass, uniform, fast cooling of the glass sheet after forming a bend in the glass sheet. In one example, the glass sheet support plates 106L, 106R may be made of glass or glass-ceramic material having the properties mentioned above. One suitable example of a glass sheet support plate material is JADE™ glass, available from Corning Incorporated. In some examples, the thickness of each glass sheet support 106L, 106R is at least 1.5 mm. Preferably, the thickness of each glass sheet support 106L, 106R is selected such that the sheet support does not flex under gravity and bending efforts.

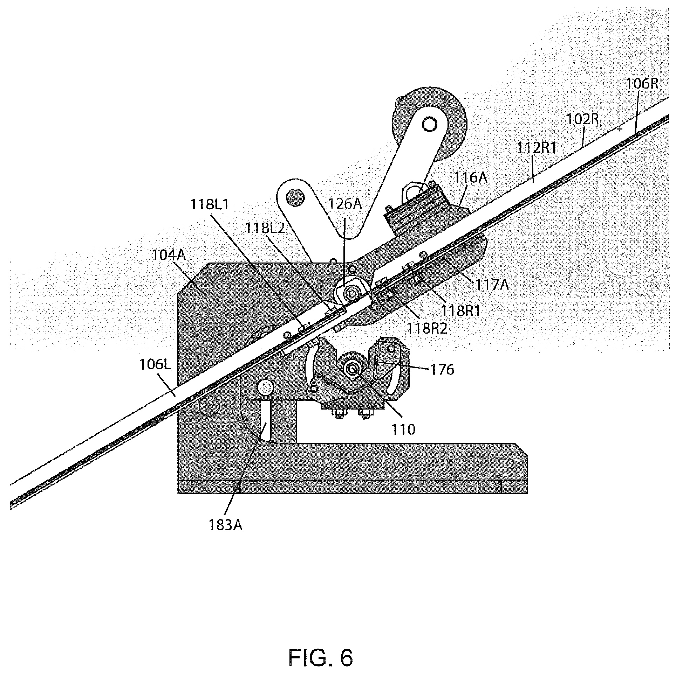

In one illustrative embodiment, the frame segment 102R includes spaced-apart arm brackets 112R1,112R2 and spaced-apart cross-bars 114R1,114R2. The cross-bars 114R1,114R2 extend between and connect the arm brackets 112R1,112R2 to form a rigid, yet light, support for the glass sheet support plate 106R. The members of the frame segment 102R may be made of a refractory metal, such as stainless steel 304 and 316L, ASI 310, and Inconel 600. In one illustrative embodiment, the arm brackets 112R1,112R2 are attached to the support stands 104A, 104B, respectively. In the example shown in FIG. 6, the arm bracket 112R1 may be attached to the support stand 104A by mounting the arm bracket 112R1 on a ledge 117A on an angled arm 116A of the support stand 104A and securing the arm bracket 112R1 to the ledge 117A by bolts 118R1,118R2. A similar method of attachment may be used between the arm bracket 112R2 (in FIG. 3) and the support stand 104B (in FIG. 3).

Returning to FIG. 3, the glass sheet support plate 106R is arranged between the bolts 118R1 (the bolts 118R1 are the first set of bolts used to attach the arm brackets 112R1,112R2 to the support stands 104A, 104B, respectively) and flanges 120R1,120R2 of the cross-bar 114R2. The bolts 118R1 may serve as positioning features by placing the glass sheet support plate 106R on the frame segment 102R such that one edge of the glass sheet support plate 106R abuts the bolts 118R1. The position of the bolts 118R1 may be adjustable to change the position of the glass sheet support plate 106R on the frame segment 102R, which would affect the size of the gap 108. After placing one edge of the glass sheet support plate 106R against the bolts 118R1, the glass sheet support plate 106R can be retained on the frame segment 102R by clamping devices 122R1, 122R2.

In one illustrative embodiment, the frame segment 102L includes spaced-apart arm brackets 112L1,112L2 and spaced-apart cross-bars 114L1,114L2. The cross-bars 114L1,114L2 extend between and connect the arm brackets 112L1,112L2 to form a rigid support for the glass sheet support plate 106L. In one illustrative embodiment, the arm brackets 112L1,112L2 are coupled to the support stands 104A, 104B through rotatable joints 124A, 124B.

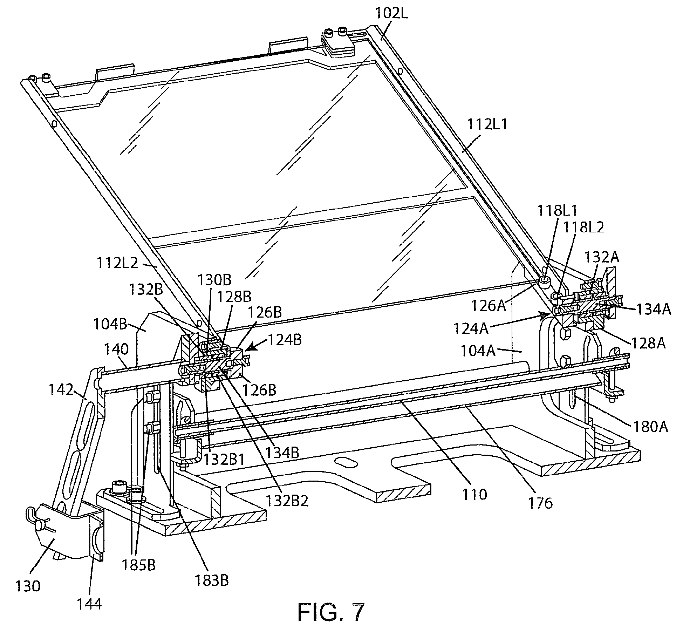

In one illustrative embodiment, as shown in FIG. 7, the rotatable joint 124B includes a pivoting arm 126B attached to an end of arm bracket 112L2, for example, by means of bolts (although the bolts are not visible in FIG. 3, the attachment between the pivoting arm 126B and the arm bracket 112L2 is similar to what is shown at bolts 118L1, 118L2 for pivoting arm 126A and arm bracket 112L1). The pivoting arm 126B is supported by a bearing assembly 128B mounted in the support stand 104B. In one example, the bearing assembly 128B includes a bearing mount 130B inserted in a hole in the support stand 104B and secured to the support stand 104B by means of, for example, bolts or the like. An offset bearing 132B made of cylindrical segments 132B1,132B2 with offset centerlines is disposed in the bearing mount 130B. A shaft 134B rotates within the offset bearing 132B, where the offset bearing 132B permits the bearing load to be shared between the cylindrical segments 132B1,132B2. The offset bearing 132B may be made of a material that can resist high temperature degradation, such as zirconia and the like. The pivoting arm 126B is mounted on the shaft 134B so as to be rotatable with the shaft 134B. This allows rotation of the pivoting arm 126B to be accomplished through rotation of the shaft 134B within the offset bearing 132B. Similarly, the rotatable joint 124A between the arm bracket 112L1 and the support stand 104A also includes a pivoting arm 126A that is attached to the arm bracket 112L1. Rotation of the pivoting arm 126A is supported by a bearing assembly 128A and shaft 134A. The bearing assembly 128A includes an offset bearing 132A to support rotation of the shaft 134A.

Returning to FIG. 3, the glass sheet support plate 106L is arranged between the bolts 118L1 (only one bolt 118L1 is shown in FIG. 3; the second bolt 118L1 is used to attach the pivoting arm 126B (in FIG. 6) to the arm bracket 112L2) and flanges 120L1, 120L2 of the cross-bar 114L2. The bolts 118L1 may serve as positioning features by placing the glass sheet support plate 106L on the frame segment 102L such that one edge of the glass sheet support plate 106L abuts the bolts 118L1. The position of the bolts 118L may be adjustable to change the position of the glass sheet support plate 106L on the frame segment 102L, which would affect the size of the gap 108. After placing one edge of the glass sheet support plate 106L against the bolts 118L1, the glass sheet support plate 106L can be retained on the frame segment 102L by clamping devices 122L1, 122L2.

In the example described above, the frame segment 102R is fixed to the support stands 104A, 104B whereas the frame segment 102L is rotatable relative to the support stands and pivotable relative to the frame segment 102R. Other arrangements are possible where the frame segment 102R may also be pivotable.

For the example described above, an articulating mechanism 130 is coupled to one of the pivoting arms, for example, the pivoting arm 126B. As shown more clearly in FIG. 7, the articulating mechanism 130 may include, for example, a tube 140 coupled to the shaft 134B and a lever 142 attached to one end of the tube 140. A movable linkage 144 may be coupled to the lever 142 to operate the lever 142 and thereby rotate the tube 140 and shaft 134B. To allow the arm brackets 112L1,112L2 to be pivoted simultaneously, and thereby avoid distortion of the frame segment 102L, the motion of the lever 142 may be coupled to both of the pivoting arms 126A, 126B. In one example, this may be achieved by coupling the shafts 134A, 134B to a transvers linking bar (146 in FIG. 3) extending across the articulated frame 102. However, other solutions are possible. Instead of coupling motion of the lever 142 to both pivoting arms 126A, 126B, it is possible to provide the pivoting arm 126A with its own articulating mechanism. The operation of this other articulating mechanism will need to be coordinated with the operation of the articulating mechanism 130 coupled to the pivoting arm 126B to provide coherent pivoting of the frame segment 102L. In other embodiments, it is possible to omit the lever 142 and rotate the shaft 134B directly using a motor or the like, while coupling the rotation of both shafts 134A, 134B by the transvers linking bar (146 in FIG. 3). In yet other embodiments, the output end of a rotary actuator, such as a motor, may be coupled directly to the shaft 134B for rotation of the shaft 134B and operation of the pivoting arm 126B. A similar rotary actuator arrangement may be used with the other shaft 134A.

Referring to FIGS. 3 and 4, in one embodiment, tunable stoppers 158A, 158B are formed on the angled arms 116A, 116B of the support stands 104A, 104B, respectively, in a position to limit travel of the transvers linking bar 146 during pivoting of the frame segment 102L. The tunable stoppers 158A, 158B may be set such that the angle between the frame segments 102L, 102R is at a final angle corresponding to a desired angle of a local bend in the glass sheet when the transvers linking bar 146 hits the tunable stoppers 158A, 158B. This will enable reproducibility of the bend formed in the glass sheet from one bending process to another.

In one illustrative embodiment, counterweight support arms 161A, 161B are coupled to the transvers linking bar 146, which would result in the counterweight support arms 161A, 161B moving towards the frame segment 102R as the frame segment 102L is pivoted towards the frame segment 102R. Counterweights 162A, 162B are mounted on the counterweight support arms 161A, 161B and will balance the weight of the frame segment 102L during pivoting of the frame segment 102L, allowing the apparatus 100 to be in a stable position while forming the local bend in the glass sheet and after the local bend has been formed in the glass sheet and during subsequent cooling of the bent glass sheet.

Below the gap 108 is a heating arrangement 172 that can be operated to locally heat the bend area of a glass sheet disposed on the articulated frame 102. The heating arrangement 172 includes the local heating device 110 previously mentioned. In some embodiments, the local heating device 110 is a radiant heater. In one illustrative embodiment, the local heating device 110 is a wired heater. The wired heater 110 may be made of a resistive material, e.g., Fe-Cr alloy or platinum, wound on a refractory rod, e.g., alumina rod. In general, any suitable local heating device 110 that can heat the glass to the desired bending temperature may be used. The length of the wired heater 110 may be selected to be the same as or greater than a length of the glass sheet in the bend area. A wired heater is simple to build and can be made to have a select shape, length, diameter, and power rating. However, other types of local heating devices besides a wired heater, e.g., solid heating elements such as carbide resistors may be used.

The heating arrangement 172 may further include a reflector 176 (see FIGS. 4 and 7) arranged below the local heating device 110 or in a position to reflect the heat generated by the local heating device 110 towards the gap 108. The reflector 176 may have a semi-circular or semi-elliptical cross-section and may be generally concentric with the local heating device 110. The reflector 176 will focus heat from the local heating device 110 towards the gap 108, where the bend area of the glass sheet will be located. The reflector 176 may be made of a refractory metal or advantageously of a precious metal such as platinum so that the reflector 176 can face the glass sheet during the duration of heating the bend area of the glass sheet without the risk of contaminating the glass sheet.

Referring to FIGS. 3 and 4, at the ends of the reflector 176 are brackets 178A, 178B with circular slots 180A, 180B. Pins 182A, 182B at the ends of the reflector 176 are disposed in and movable within the circular slots 180A, 180B. The pins 182A, 182B can be moved within their respective circular slots 180A, 180B to rotate the reflector 176 to a desired orientation relative to the gap 108 (or relative to a bend area of a glass sheet exposed at the gap 108). When the reflector 176 is at the desired orientation, the pins 182A, 182B may be secured in place within the circular slots 180A, 180B, for example, by means of nuts or the like. Alternately, the pins 182A, 182B may be movable within the circular slots 180A, 180B during bending of the glass sheet, resulting in rotation of the reflector 176 and adjustment of the orientation of the reflector 176 relative to the bend area of the glass sheet during the bending operation.

In one embodiment, the local heating device 110 is clamped to the brackets 178A, 178B so that the local heating device 100 and reflector 176 are movable as a unit. The brackets 178A, 178B may be coupled to the support stands 104A, 104B by adjustable joints. Such adjustable joints may include linear slots 183A, 183B (linear slot 183A is shown in FIG. 6) in the support stands 104A, 104B, respectively, and pins that can be inserted through the brackets 178A, 178B and into the linear slots 183A, 183B (pins 185B are shown in the linear slot 183B in FIGS. 3 and 7; there are similar pins in the linear slot 183A). The position of the pins in the linear slots can be adjusted prior to securing the pins in place using, for example, nuts. This will allow the height of the local heating device 110 and reflector 176 to be adjustable relative to the gap 108 (in FIG. 3). In general, the closer the local heating device 110 is to the bend area of the glass sheet, the smaller the radius of the bend that can be formed in the bend area of the glass sheet, and vice versa. The radius of the bend formed in the bend area of the glass sheet will be naturally splined according to the thermal gradient profile and associated viscosity profile in the heated bend area.

A method of forming a local bend in the glass sheet 10 includes placing the glass sheet 10 on the articulated frame 102 such that the bend area 12 of the glass sheet 10 is located at the forming gap 108 and the wing areas 14, 16 of the glass sheet 10 rest on the glass sheet support plates 106L, 106R, as shown in FIG. 5. The glass sheet is then uniformly preheated in an oven. An oven is illustrated at 190 and may include any suitable heating arrangement 192 for uniformly heating the glass sheet to the desired preheating temperature. The preheating temperature is a temperature that is lower than a bending temperature of the glass sheet. The preheating temperature may be between the transition point to slightly above the annealing point of the glass. In some embodiments, the glass sheet 10 maybe preheated to a preheating temperature in which the viscosity of the glass is in a range from 10¹³ to 10^{12.5} P.

After the glass sheet 10 reaches the desired preheated temperature, the local heating device 110 is operated to locally heat the bend area 12 of the glass sheet 10 to a bending temperature. The bending temperature is a temperature at which the glass can be bent quickly, e.g., in 10 seconds or less, without damage to the glass. The bending temperature may correspond to a glass viscosity in a range from 10^{11.4} to 10¹¹ P, for example. While the bend area 12 is locally heated to the bending temperature, the wing areas 14,16 of the glass sheet 10 will remain substantially at the preheating temperature. For example, if the glass sheet 10 is made of the glass types mentioned previously, the wing areas 14,16 of the glass sheet 10 maybe maintained at 580 to 630°C while the bend area 12 is locally heated to a temperature in a range from 660 to 690°C. The bend area 12 may reach the desired bending temperature in 2 to 4 minutes, for example, with use of a wired heater or radiant heating.

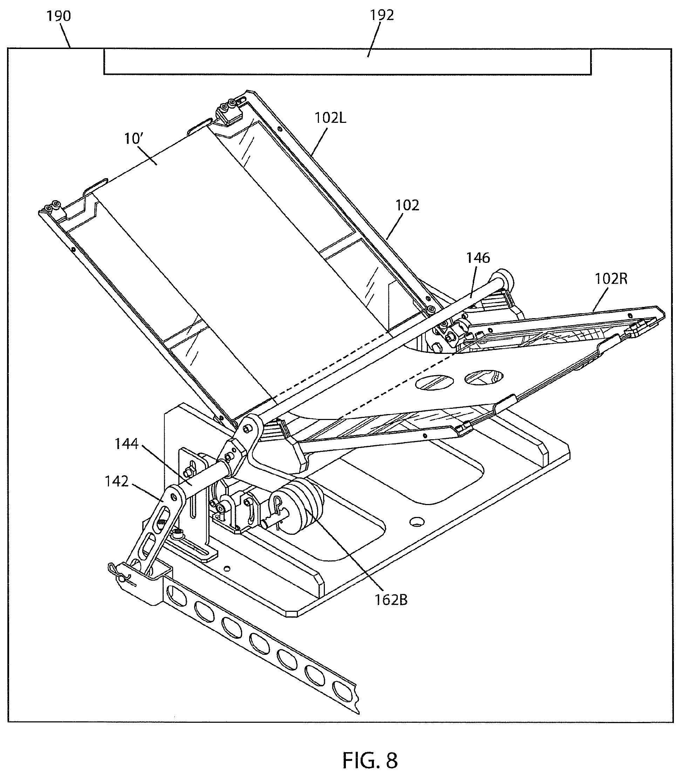

After the bend area 12 reaches the bending temperature, the bend area 12 is held at the bending temperature for a duration in which a bend is formed in the bend area 12. This duration may be, for example, between 10 and 60 seconds. The bend is formed in the bend area 12 by pivoting the frame segment 102L towards the frame segment 102R, as shown in FIG. 8. The frame segment 102L can be pivoted towards the frame segment 102R, for example, by applying an external force to the lever 142 using a command trigger or other convenient activation means. As the frame segment 102L is pivoted towards the frame segment 102R, the articulated frame 102 will apply bending forces to the wing areas 14,16 of the glass sheet, resulting in a local bend in the bend area 12. The profile of the local bend will depend on the thermal gradient profile in the bend area 12, and the angle of the local bend will depend on the final angle between the frame segments 102L, 102R. After the bend is formed, the frame segments 102L, 102R are held at the final angle while allowing the glass sheet 10 to cool down.

The bent glass sheet, or shaped glass article, 10' can be removed from the articulated frame 102 after cooling of the glass sheet. In some embodiments, the shaped glass article can be separated along the local bend to form two half products. In some embodiments, the apparatus 100 can be outfitted to form several shaped glass articles in one bending cycle. This can be done by configuring the articulated frame 102 to support several glass sheets side by side, where during a bending cycle local bends can be formed simultaneously in the glass sheets in a manner similar to forming a local bend in a single glass sheet as described above.

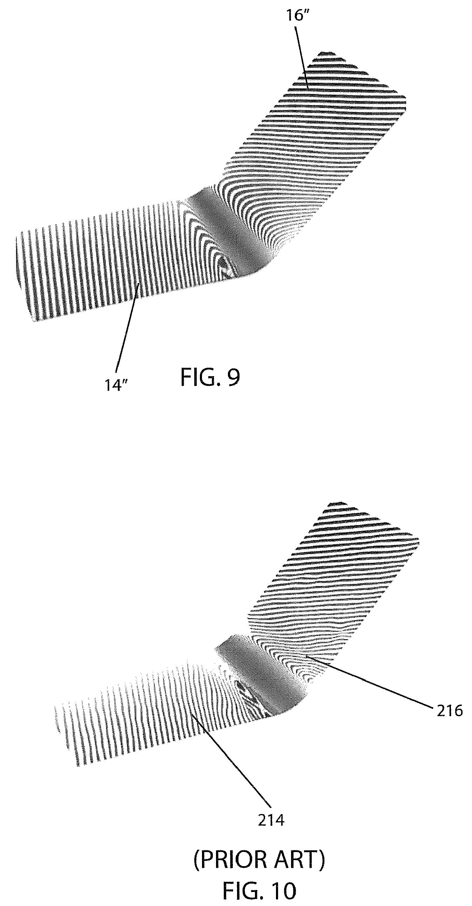

FIG. 9 shows an image of a bent glass sheet formed by the apparatus and method described in this disclosure. The image was obtained by reflectometry technique and shows that there are no optical distortions in the flat wing areas 14", 16" of the glass sheet. For comparison purposes, FIG. 10 shows an image of a bent glass formed by an isothermal sagging process. In the image shown in FIG. 10, there are visible optical distortions in the flat wing areas 214, 216 of the glass sheet.

While the invention has been described with respect to a limited number of embodiments, those skilled in the art of, having benefit of this disclosure, will appreciate that other embodiments can be devised which do not depart from the scope of the invention as disclosed herein. Accordingly, the scope of the invention should be limited only by the accompanying claims.

## Claims

1. An apparatus (100) for forming a local bend in a glass sheet (10), comprising:
an articulated frame (102), comprising:
a first frame segment (102L);
a second frame segment (102R) arranged adjacent to the first frame segment (102L), wherein at least one of the first frame segment (102L) and the second frame segment (102R) is pivotable such that an angle between the first frame segment (102L) and the second frame segment (102R) is adjustable by relative pivotal motion between the first frame segment (102L) and the second frame segment (102R);
a first glass sheet support plate (106L) mounted on the first frame segment (102L) for supporting a first wing area of the glass sheet (10), the first glass sheet support plate (106L) having a first plate end (106L1); and
a second glass sheet support plate (106R) mounted on the second frame segment (102R) for supporting a second wing area of the glass sheet (10), the second glass sheet support plate (106R) having a second plate end (106R1) in opposing relation to the first plate end (106L1) and spaced from the first plate end (106L1) by a gap (108) having a size corresponding to a bend area of the glass sheet (10);
wherein the bend area of the glass sheet (10) is exposed to the gap (108) when the first and second wing areas of the glass sheet (10) are supported on the first (106L) and second (106R) glass sheet support plates, respectively;
wherein the gap (108) defines a no-contact forming area in which the local bend can be formed in the bend area of the glass sheet (10) without touching the bend area;
at least one articulating mechanism (130) for pivoting at least one of the frame segments (102L) relative to the other frame segment (102R) to form a select angle between the first (102L) and second (102R) frame segments; and
a local heating device (110) arranged near the gap (108) for localized heating of the bend area of the glass sheet (10) exposed to the gap (108).

2. The apparatus of claim 1, further comprising two stands (104A, 104B) in a spaced apart relation, wherein the articulated frame (102) is arranged between the two stands and coupled to the two stands, and wherein the first frame segment (102L) is rotatable relative to the two stands.

3. The apparatus of claim 2, further comprising a tunable stopper (158A) arranged on at least one of the two stands (104A) to limit pivoting of the first frame segment once the select angle is formed between the first and second frame segments.

4. The apparatus of claim 2 or claim 3, further comprising two bearing assemblies (128A, 128B) mounted to the two stands (104A, 104B) and a shaft (134A, 134B) rotatably supported in each of the bearing assemblies, wherein the first frame segment (102L) is coupled to each of the shafts such that rotation of the shafts (134A, 134B) causes pivoting of the first frame segment (102L).

5. The apparatus of claim 4, wherein one of the shafts (134B) is coupled to the at least one articulating mechanism (130), and wherein both shafts (134A, 134B) are coupled to a transvers linking bar (146) extending across the articulated frame (102) such that both shafts (134A, 134B) are rotatable using the at least one articulating mechanism (130).

6. The apparatus of any of claims 1-5, further comprising counterweights (162A, 162B) for balancing the weight of the first frame segment (102L) and maintaining the apparatus (100) in a stable position as the first frame segment (102L) is pivoted relative to the second frame segment (102R) and held at the select angle relative to the second frame segment (102R).

7. The apparatus of any of claims 1-6, wherein each of the first (106L) and second (106R) glass sheet support plates is made of a glass or glass-ceramic material.

8. The apparatus of any of claims 1-7, wherein each of the first (106L) and second (106R) glass sheet support plates is made of a transparent material having a coefficient of thermal expansion of 32 x 10⁻⁷ C⁻¹ or less and a transmission in the infrared range of at least 70%.

9. The apparatus of any of claims 1-8, further comprising a heating device (192) other than the local heating device (110) for heating the entire glass sheet (10) to a preheating temperature.

10. The apparatus of any of claims 1-9, further comprising a reflector (176) arranged near the gap (108) and local heating device(110) in a position to reflect heat from the local heating device (110) towards the gap (108), wherein a height of the local heating device (110) and a height of the reflector (176) relative to the gap (108) are optionally adjustable.

11. The apparatus of any of claims 1-10, wherein the articulated frame (102) has a flat position in which the first (102L) and second (102R) frame segments lie in the same plane, and wherein the articulated frame (102) is inclined to the horizontal when in the flat position.

12. A method of bending a glass sheet (10), comprising:
supporting a first wing area (14) of the glass sheet (10) by placing a surface of the first wing area (14) of the glass sheet (10) in contact with a surface of a first glass sheet support plate (106L) attached to a first frame segment (102L) of an articulated frame (102), the first glass sheet support plate (106L) having a first plate end (106L1);
supporting a second wing area (16) of the glass sheet (10) by placing a surface of the second wing area (16) of the glass sheet (10) in contact with a surface of a second glass sheet support plate (106R) attached to a second frame segment (102R) of the articulated frame (102), the second glass sheet support plate (106R) having a second plate end (106R1) that is in opposing relation to the first plate end (106L1) and spaced from the first plate end (106L1) by a gap (108);
forming an unsupported bend area of the glass sheet (10) by positioning a bend area (12) of the glass sheet (10) between the first (14) and second (16) wing areas at the gap (108) without physically supporting the bend area (12);
heating the entire glass sheet (10) to a select preheating temperature;
locally heating the unsupported bend area (12) of the glass sheet (10) to a bending temperature that is higher than the select preheating temperature while maintaining the supported wing areas (14, 16) of the glass sheet (10) at a temperature lower than the bending temperature; and
moving the articulated frame (102) to a bent position by relative pivotal motion between the first (102L) and second (102R) frame segments while the unsupported bend area (12) is at the bending temperature, wherein the moving articulated frame (102) applies bending forces to the glass sheet (10), wherein the bending forces and the localized heat applied to the unsupported bend area (12) forms a bend having a select profile in the bend area.

13. The method of claim 12, wherein moving the articulated frame (102) to the bent position comprises moving the articulated frame (102) from a flat position to the bent position.

14. The method of claim 12 or claim 13, wherein heating the entire glass sheet (10) to a preheating temperature comprises heating the entire glass sheet (10) to a temperature in which the glass sheet (10) has a viscosity in a range from 10¹³ to 10^{12.5} P.

15. The method of any of claims 12-14, wherein locally heating the unsupported bend area (12) comprises locally heating the unsupported bend area (12) to a temperature in which a portion of the glass sheet (10) in the unsupported bend area (12) has a viscosity in a range from 10^{11.4} to 10¹¹ P.

16. The method of any of claims 12-15, wherein the glass sheet (10) comprises a soda lime, an aluminosilicate, an alkali aluminosilicate, an alumino-borosilicate, or an alkali-boro-aluminosilicate glass.
